# EUROPEAN PATENT SPECIFICATION

(11) **EP 1 369 294 B1**
(45) Date of publication and mention of the grant of the patent: **16.04.2008**
(21) Application number: 03076629.9
(22) Date of filing: 28.05.2003
(51) Int. Cl.: B60N 2/28

(54) **A chassis suitable for attaching an infant vehicle seat to a vehicle seat, such an assembly and an infant vehicle seat**
Träger zum Befestigen eines Kindersitzes an einem Fahrzeugsitz, eine solche Einrichtung und ein Fahrzeugkindersitz
Châssis pour fixer un siège d'enfants à un siège de véhicules, un tel assemblage et un siège d'enfants pour véhicules

(30) Priority: 05.06.2002 NL 1020765
(43) Date of publication of application: 10.12.2003
(73) Proprietor: Maxi Miliaan B.V., 5705 DG Helmond (NL)
(72) Inventor: Siewertsen, Adriaan, 5691 MD Son En Breugel (NL); Van der Mullen, Alphonse Leonard Jean Marie, 5986 CE Beringe (NL)
(74) Representative: Veldman-Dijkers, Cornelia G. C.

(56) References cited:
- EP-A- 1 157 880
- WO-A-01/64471
- DE-U- 9 208 053
- DE-U- 20 001 394
- GB-A- 1 059 237
- US-A- 5 971 479

## Description

The invention relates to a chassis suitable for detachable attachment of an infant vehicle seat to a vehicle seat, which chassis comprises a frame and a clamping bracket which is pivotable with respect to the frame, which clamping bracket is movable from a first, relaxed position to a second position, in which the clamping bracket has been pivoted towards the vehicle seat in use, and vice versa, said chassis being provided with locking means by which the clamping bracket can be locked in the second position against return movement towards the first position.

A chassis of this kind, as known from German utility model No. 200.01.394, is detachably attached to brackets present in a vehicle seat by means of specific mounting means. Subsequently, a detachable infant vehicle seat is placed on the chassis. The advantage of a detachable connection between the infant vehicle seat and the chassis is that the chassis can remain behind in the vehicle upon removal of the infant vehicle seat from the vehicle. The chassis can be optimally designed with a view to realising a firm connection between the infant vehicle seat and the vehicle seat.

In order to achieve a firm connection between the infant vehicle seat and the vehicle seat it is important that the chassis and/or the infant vehicle seat abut both against the seat portion and against the back portion of the vehicle seat, preferably they are pressed against said seat portion and said back portion. At the same time, however, fitting the chassis and connecting it to the vehicle seat must be relatively easy.

The frame is clamped in place and fixed in position with respect to the vehicle seat by means of the clamping bracket.

One drawback of the known chassis, however, is the fact that the infant seat that is connected thereto may be spaced from a back portion of a vehicle seat by a relatively large distance, as a consequence of which an infant present in the infant seat will be positioned relatively close to another vehicle seat present in front of the vehicle seat or to the dashboard of the vehicle, so that there is a relatively great danger of the infant impacting therewith in the case of a collision.

Consequently it is an object of the present invention to provide a chassis which can be connected to a vehicle seat and subsequently be pressed firmly against said vehicle seat in a relatively simple manner, whilst in addition the spacing between an infant vehicle seat fitted to the chassis and the vehicle seat is relatively limited.

This object is accomplished with the chassis according to the invention in that the chassis comprises a support capable of sliding movement with respect to the frame, which support is pivotally connected to the clamping bracket and which is movable in the direction of the clamping bracket upon movement of the clamping bracket from the first position to the second position.

The chassis according to the invention is first positioned on the seat portion of the vehicle seat, for example, and subsequently connected to the vehicle seat by means which are known per se, with the clamping bracket in the first position. Following that, the clamping bracket is pivoted in the direction of the back portion of the vehicle seat, for example, and pressed firmly against said back portion, as a result of which the chassis is clamped in place with respect to the vehicle seat. Thus, a firm connection between the chassis and the vehicle seat is obtained. The clamping bracket can be placed in any desired second position, stepwise or gradually, depending on the angle of the back portion of the vehicle seat, the shape of the vehicle seat, etc. The chassis is retained in this clamped-down position by the locking means.

The support functions to support the infant vehicle seat. Since the support is likewise moved towards the vehicle seat upon movement of the clamping bracket towards the vehicle seat, the infant vehicle seat will be positioned relatively close to the vehicle seat. It has become apparent that the forces exerted on the infant vehicle seat and the movements of the infant vehicle seat in the case of a collision of the vehicle will be more advantageous as the infant vehicle seat is positioned closer to the vehicle seat.

It is also possible to detachably attach the chassis to the vehicle seat by means of the seat belts present in the vehicle seat.

Another embodiment of the chassis according to the invention is characterized in that the frame and the support each comprise a tube, which tubes are coaxially slidable with respect to each other, which tubes can be locked against telescoping one into each other with the aid of said locking means.

The telescopic tubes make it possible to move the support and lock it in position with respect to the frame in a simple manner. As a result of the locking engagement of the support, a locking engagement of the clamping bracket is effected as well. In addition, the tubes are capable of withstanding forces exerted on the chassis in the case of a collision.

Yet another embodiment of the chassis according to the invention is characterized in that the locking means comprise a tiltable plate, through which a tube extends, which tiltable plate extends transversely to the tube when the tubes are extended, whilst the plate, which is tilted with respect to the central axis, locks the tubes against telescoping one into another.

The use of such a tiltable plate makes it possible to absorb relatively large forces in a relatively simple manner, with the clamping bracket and the support connected thereto being pressed further and further towards and against the back portion of the vehicle seat, stepwise or gradually, as desired, in which case the tiltable plate prevents the tubes from telescoping one into another again.

The invention will now be explained in more detail with reference to the drawings, in which:
Figure 1 is a perspective view of the chassis according to the invention, in a first, relaxed position thereof;
Figure 2 is a perspective view of a chassis according to the invention in a second, clamped-down position;
Figure 3 is an exploded view of the chassis of Figures 1 and 2;
Figure 4 is a cross-sectional view of the chassis that is shown in Figure 3;
Figure 5 shows an enlarged part of the chassis that is shown in Figure 4;
Figure 6 is a top plan view of a part of the chassis that is shown in Figure 3;
Figure 7 is a cross-sectional view of the chassis that is shown in Figure 3, in which the chassis is attached to a vehicle seat by means of a seat belt;
Figure 8 is a side elevation of a part of the chassis that is shown in Figure 7; and
Figure 9 is a top plan view of the chassis that is shown in Figure 7.

Like parts are indicated by the same numerals in the various Figures.

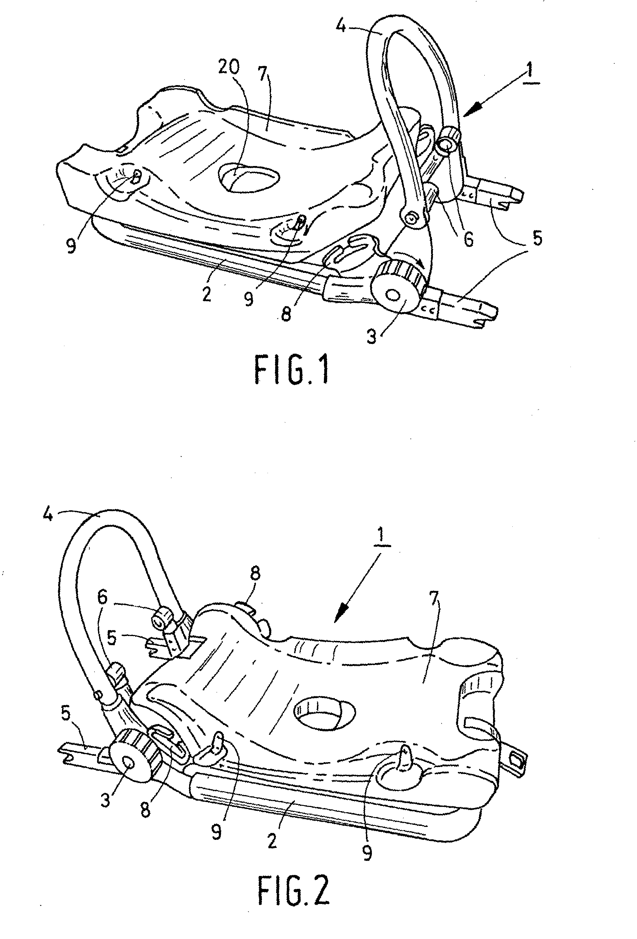

Figure 1 and Figure 2 are perspective views of a chassis 1 according to the invention, which comprises a metal frame 2, a clamping bracket 4, which is pivotally connected to the frame 2 about pivot pins 3, connecting pieces 5 connected to the frame 2, which can be connected to brackets present in a vehicle seat, and a support 7 pivotally connected to the clamping bracket 4 about pivot pins 6, which support 7 is slidably connected to the frame 2. The frame 2 is provided with seat belt guiding elements 8 positioned near the pivot pins 3. An infant vehicle seat can be mounted on the support by means of locking pins 9. The mounting of an infant vehicle seat on the support 7, which can be effected in various alternative manners, is described in another patent application of the present applicant and will not be explained in more detail herein, therefore.

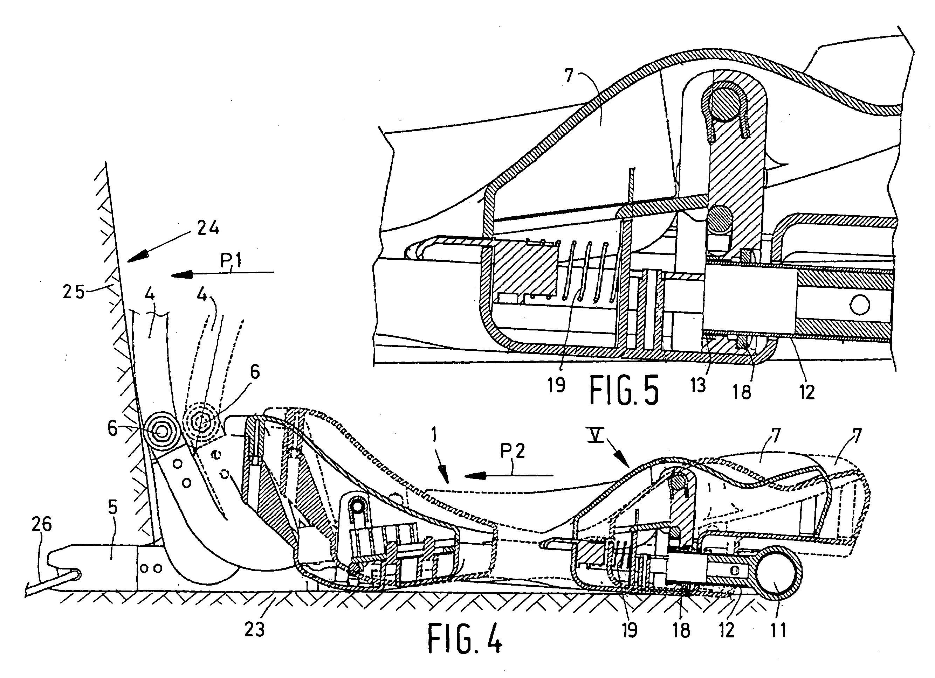

The clamping bracket 4 can pivot about pivot pins 3 in the direction indicated by the arrow P1 from the first, relaxed position that is shown in Figure 1 to the second, clamping position that is shown in Figure 2. The exact operation of the chassis 1 will be explained in more detail yet with reference to Figures 4-6.

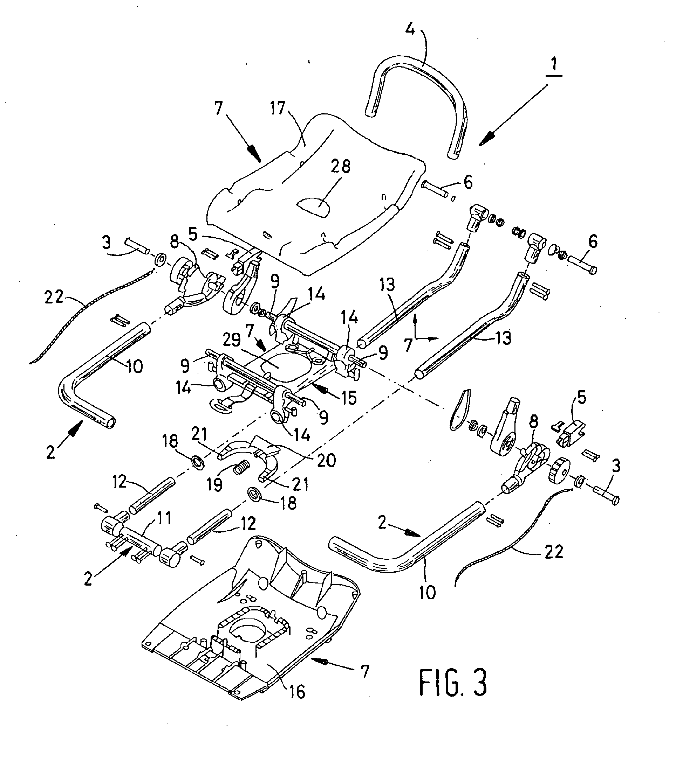

Figure 3 is an exploded view of the chassis 1 according to the invention. As Figure 3 shows, the metal frame 2 comprises two supporting tubes 10 extending parallel to each other, and a tube member 11 interconnecting the supporting tubes 10. Connected to the tube member 11 are two parallel tubes 12, which are slidably supported with their ends remote from the tube member 11 in tubes 13 of the support 7 extending coaxially therewith. The tubes 13 extend through guides 14, to which furthermore a mechanism 15 for operating the locking pins 9 and two plastic elements 16, 17 are connected.

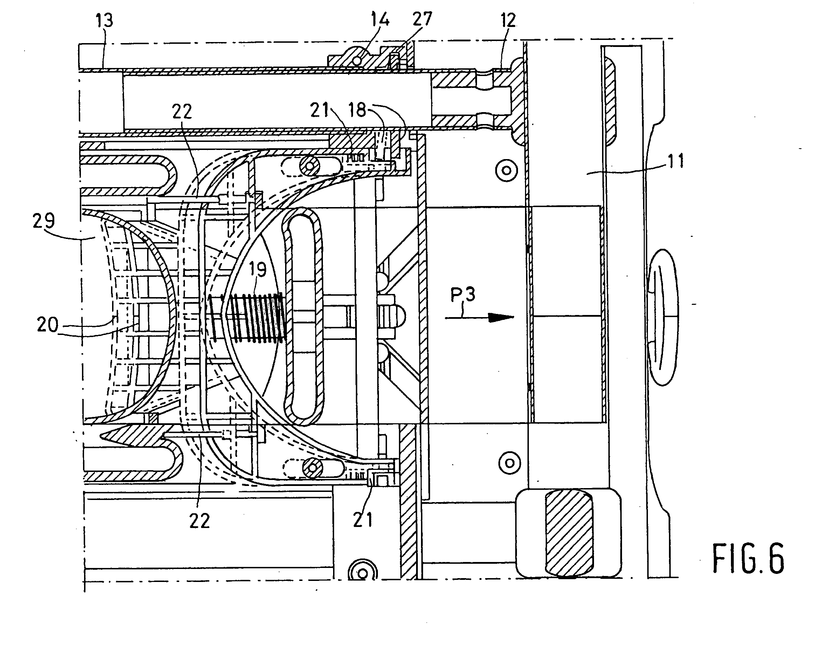

Figure 3 furthermore shows two ring-shaped plates 18, which are tiltably supported in guides 14, with the tubes 12 connected to the frame 2 extending through the plates 18. Disposed between the mechanism 15 and the plastic elements 16 is a slide 20 which is capable of sliding movement against the spring force of a spring 19, whilst edges of the plates 18 are positioned within ends 21 of the slide 20. As is shown in Figure 6, the plates 18 are capable of tilting movement in relatively small slots 27 of the guides 14 with their sides remote from the ends 21 of the slide 20. The slots 27 in the guides 14 widen towards the centre of the chassis 1.

The chassis 1 furthermore comprises cables 22 extending between the slide 20 and the connecting pieces 5.

The operation of the chassis 1 will now be described in more detail with reference to Figures 4 and 5. The support 7 and the clamping bracket 4 are in the relaxed position illustrated in dotted lines. The chassis 1 is positioned on a seat portion 23 of a vehicle seat 24 by a user. Positioned between the seat portion 23 and a back portion 25 of the vehicle seat are brackets 26, which are firmly connected to the vehicle. The connecting pieces 5 of the chassis 1 are slid between the back portion 25 and the seat portion 23 and connected to the brackets 26 in a manner which is known per se. Since the clamping bracket 4 does not abut against the back portion 25, it is relatively easy to effect the connection between the connecting pieces 5 and the brackets 26. The chassis is now connected to the vehicle, it is true, but without additional measures being taken it could simply pivot about the brackets 26 in a direction away from the seat portion 23, towards the back portion 25 in the case of a collision from behind. With the chassis 1 according to the invention, the user subsequently pivots the clamping bracket 4 about the pivot pins 3 in the direction indicated by the arrow P1, from the relaxed position illustrated in dotted lines to the clamping position illustrated in full lines, in which position the clamping bracket 4 is firmly pressed against the back portion 25, with one hand. Whilst moving the clamping bracket 4 to the clamping position, the user presses the frame 2 against the seat portion 23 with his or her other hand. As is shown in Figure 4, the pivot pins 6 are moved in the direction of the back portion 25 upon pivoting movement of the clamping bracket 4. As a result, also the tubes 13 connected to the pivot pins 6 and the support 7 connected thereto are moved in the direction indicated by the arrow P2, towards the back portion 25. The tubes 13 are moved out of the tubes 12 during this movement. The plates 18 automatically take up a position transversely to the central axes of the tubes 12, 13, as is shown in Figure 5. As soon as the user releases the clamping bracket 4, the back portion 25 will exert a force on the clamping bracket 4 in the opposite direction of the arrow P1, causing the tubes 12 to be pressed in the opposite direction of the arrow P2, towards the tubes 12 . This will cause the plates 18 to tilt in the wedge-shaped slots 27 towards the position illustrated in dotted lines in Figure 6. In this position, the plates 18 tilt about the tubes 12 and prevent the tubes 12 from moving through the plates 18 and thus into the tubes 13. The plates 18 form locking means, which prevent the tubes 13 and the clamping bracket 14 from returning to the relaxed position that is illustrated in dotted lines in Figure 4. After the clamping bracket 4 has been pressed sufficiently firmly against the back portion 25, the user can position an infant vehicle seat on the chassis 1, which infant vehicle seat is firmly connected to the chassis 1 by means of locking pins 9. Since the support 7 has been moved towards the back portion 25 during movement of the clamping bracket 4 to the clamping position, the infant vehicle seat, which is connected to the chassis 1, will be positioned relatively close to the back portion 25.

As long as an infant vehicle seat is connected to the chassis 1, it will not be possible to unlock the clamping bracket 4 and/or break the connection between the connecting pieces 5 and the brackets 26.

Only after the infant vehicle seat has been removed from the chassis 1 can the user move the slide 20 against the spring force of the spring 19 in the direction indicated by the arrow P3, from the position illustrated in dotted lines in Figure 6 to the position illustrated in full lines, through openings 28, 29 (Figure 3) present in the support 7. During said movement, the ends 21 of the slide 20 press against the tilted plates 18, which causes the plates 18 to move from the tilted position to the position in which they extend transversely to the central axes of the tubes 12, 13. In this position, the tubes 12 can be moved with respect to the tubes 13, and they can be moved into said tubes by spring force or by manual force. As a result of the telescoping movement of the tubes 12, 13, the pivot pins 6 are moved in a direction away from the back portion 25, and the clamping bracket 4 is pivoted about the pivot pins 3 in the opposite direction of the arrow P1. The chassis 1 is no longer pressed against the vehicle seat in this position.

Subsequently, the slide is pulled further in the direction indicated by the arrow P3 by the user, as a result of which forces are exerted on the connecting pieces 5 via the cables 22 connected to the slide 20, causing the connecting pieces 5 to be disconnected from the brackets 26 in a manner which is known per se. Following that, the chassis 1 can be removed from the vehicle seat.

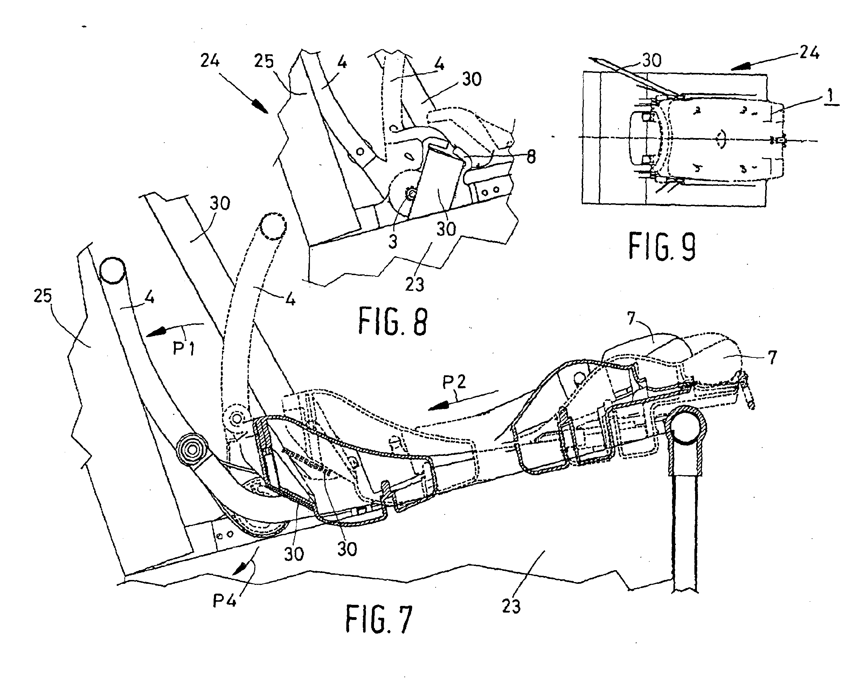

Figures 7-9 show a further use of the chassis 1 according to the invention, in which the frame 2 is connected to the vehicle seat 24 by means of a seat belt 30 passed through the seat belt guiding elements 8. The seat belt 30 extends through the seat belt guiding elements 8 positioned on either side of the frame 2 with a belt portion extending between the support 7 and the clamping bracket 4. Subsequently, the clamping bracket 4 is pivoted from the position illustrated in dotted lines in Figure 7 to the position illustrated in full lines in Figure 7 in the same manner as described above. During this movement, the support 7 is moved in the direction indicated by the arrow P2. The belt portion of the seat belt 30 that extends between seat belt guiding elements 8 positioned on either side of the frame 2 is pressed in the direction indicated by the arrow P4 during this movement, causing the seat belt 30 to be tensioned.

It is also possible to connect the infant vehicle seat permanently to the chassis. In such a case, the slide 20 must be movable in a different manner, for example by means of an operating element positioned near the front side of the chassis 1.

Instead of using tubes, it is also possible to use other types of sections telescoping one into another, such as a square bar that slides into a square sleeve, etc.

A pin-hole mechanism may be used as the locking means, in which case the clamping bracket can be placed in a number of predetermined positions.

It is also possible to fit the pivot pins 3 with a ratchet mechanism, by means of which the open bracket can be locked in position.

## Claims

1. A chassis (1) suitable for detachable attachment of an infant vehicle seat to a vehicle seat (24), which chassis (1) comprises a frame (2) and a clamping bracket (4) which is pivotable with respect to the frame (2), which clamping bracket is movable from a first, relaxed position to a second position, in which the clamping bracket (4) has been pivoted towards the vehicle seat (24) in use, and vice versa, said chassis (1) being provided with locking means (18) by which the clamping bracket (4) can be locked in the second position against returning towards the first position, **characterized in that** the chassis (1) comprises a support (7) capable of sliding movement with respect to the frame (2), which support (7) is pivotally connected to the clamping bracket (4) and which is movable in the direction of the clamping bracket (4) upon movement of the clamping bracket (4) from the first position to the second position.

2. A chassis (1) according to claim 1, **characterized in that** the frame (2) and the support (7) each comprise a tube, which tubes are coaxially slidable with respect to each other, and which can be prevented from telescoping one into another by said locking means (18).

3. A chassis (1) according to claim 2, **characterized in that** the locking means (18) comprise a tiltable plate, through which a tube extends, which tiltable plate extends transversely to the tube when the tubes are extended, whilst the plate, which is tilted with respect to the central axis, prevents the tubes from telescoping one into another.

4. A chassis (1) according to claim 3, **characterized in that** said tiltable plate is movable against spring force from a tilted position to an unlocking position, in which the plate extends transversely to the central axis of the tube.

5. A chassis (1) according to any one of the preceding claims, **characterized in that** the locking means (18) comprise a ratchet mechanism or a pin-hole mechanism.

6. A chassis (1) according to any one of the preceding claims, **characterized in that** the chassis (1) comprises connecting elements to be connected to brackets present in the vehicle seat (24).

7. A chassis (1) according to any one of the preceding claims, **characterized in that** the chassis (1) comprises seat belt guiding elements, with movement of the clamping bracket (4) from the first position to the second position causing a seat belt being passed through said seat belt guiding elements and being connected to the vehicle seat (24) to be tensioned.

8. A chassis (1) according to claim 7, **characterized in that** the seat belt can be tensioned by means of a support (7) which is movable with respect to the frame (2), with the support (7) being movable between two seat belt guiding elements disposed on either side of the frame (2).

## Patentansprüche

1. Träger (1), geeignet zum abnehmbaren Befestigen eines Fahrzeugkindersitzes an einem Fahrzeugsitz (24), wobei der Träger (1) einen Rahmen (2) und einen Klemmbügel (4), der bezüglich des Rahmens (2) schwenkbar ist, umfasst, wobei der Klemmbügel aus einer ersten entspannten Lage in eine zweite Lage, in welche der Klemmbügel (4) im Gebrauch zum Fahrzeugsitz (24) hin geschwenkt wurde, und umgekehrt beweglich ist, wobei der Träger (1) mit Verriegelungsmitteln (18) versehen ist, mittels derer der Klemmbügel (4) in der zweiten Lage gegen eine Rückkehr in Richtung auf die erste Lage verriegelt werden kann, **dadurch gekennzeichnet, dass** der Träger (1) einen Halter (7) aufweist, welcher relativ zum Rahmen (2) gleitend bewegt werden kann, wobei der Halter (7) schwenkbar mit dem Klemmbügel (4) verbunden ist und bei der Bewegung des Klemmbügels (4) aus der ersten Lage in die zweite Lage in Richtung auf den Klemmbügel (4) zu beweglich ist.

2. Träger (1) nach Anspruch 1, **dadurch gekennzeichnet, dass** der Rahmen (2) und der Halter (7) jeweils ein Rohr umfassen, wobei die Rohre koaxial zueinander gleiten können und durch die Verriegelungsmittel (18) an einer Teleskopbewegung ineinander gehindert werden können.

3. Träger (1) nach Anspruch 2, **dadurch gekennzeichnet, dass** die Verriegelungsmittel (18) eine kippbare Platte umfassen, durch die sich ein Rohr erstreckt, wobei die kippbare Platte sich quer zum Rohr erstreckt, wenn die Rohre ausgezogen sind, während die Platte, hinsichtlich der Mittenachse gekippt, die Rohre an einer Teleskopbewegung ineinander hindert.

4. Träger (1) nach Anspruch 3, **dadurch gekennzeichnet, dass** die kippbare Platte gegen eine Federkraft aus einer gekippten Lage in eine Freigabelage bewegt werden kann, in der sich die Platte quer zur Mittenachse des Rohrs erstreckt.

5. Träger (1) nach einem der vorangehenden Ansprüche, **dadurch gekennzeichnet, dass** die Verriegelungsmittel (18) einen Sperrklinkenmechanismus oder einen Stift-Loch-Mechanismus umfassen.

6. Träger (1) nach einem der vorangehenden Ansprüche, **dadurch gekennzeichnet, dass** der Träger (1) Verbindungselemente zur Verbindung mit im Fahrzeugsitz (24) vorhandenen Bügeln umfasst.

7. Träger (1) nach einem der vorangehenden Ansprüche, **dadurch gekennzeichnet, dass** der Träger (1) Sitzgurtführungselemente umfasst, wobei durch die Bewegung des Klemmbügels (4) aus der ersten Lage in die zweite Lage ein Sitzgurt durch die Sitzgurtführungselemente geführt und zum Spannen mit dem Fahrzeugsitz (24) verbunden wird.

8. Träger (1) nach Anspruch 7, **dadurch gekennzeichnet, dass** der Sitzgurt mittels des relativ zum Rahmen (2) beweglichen Halters (7) gespannt werden kann, wobei der Halter (7) zwischen zwei an beiden Seiten des Rahmens (2) angebrachten Sitzgurtführungselementen beweglich ist.

## Revendications

1. Châssis (1) adapté à la fixation démontable d'un siège de véhicule pour enfant sur un siège de véhicule (24), lequel châssis (1) comprend un cadre (2) et un support de serrage (4) qui peut pivoter par rapport au cadre (2), lequel support de serrage est mobile depuis une première position relâchée jusqu'à une deuxième position, dans laquelle le support de serrage (4) a été amené à pivoter vers le siège de véhicule (24) lors de l'utilisation, et vice-versa, ledit châssis (1) étant pourvu de moyens de blocage (18) grâce auxquels le support de serrage (4) peut être bloqué dans la deuxième position à l'encontre d'un retour vers la première position, **caractérisé en ce que** le châssis (1) comprend un support (7) capable d'un mouvement coulissant par rapport au cadre (2), lequel support (7) est relié de façon pivotante au support de serrage (4) et est mobile dans la direction du support de serrage (4) lors du mouvement du support de serrage (4) depuis la première position jusqu'à la deuxième position.

2. Châssis (1) selon la revendication 1, **caractérisé en ce que** le cadre (2) et le support (7) comportent chacun un tube, lesquels tubes peuvent coulisser coaxialement l'un par rapport à l'autre, et peuvent être empêchés d'entrer de manière télescopique l'un dans l'autre grâce aux dits moyens de blocage (18).

3. Châssis (1) selon la revendication 2, **caractérisé en ce que** les moyens de blocage (18) comprennent une plaque inclinable, à travers laquelle s'étend un tube, laquelle plaque inclinable s'étend transversalement au tube lorsque les tubes sont sortis, alors que la plaque, qui est inclinée par rapport à l'axe central, empêche les tubes d'entrer de manière télescopique l'un dans l'autre.

4. Châssis (1) selon la revendication 3, **caractérisé en ce que** ladite plaque inclinable est mobile à l'encontre d'une force de ressort depuis une position inclinée jusqu'à une position de déblocage, dans laquelle la plaque s'étend transversalement à l'axe central du tube.

5. Châssis (1) selon l'une quelconque des revendications précédentes, **caractérisé en ce que** les moyens de blocage (18) comprennent un mécanisme à cliquet ou un mécanisme à axe-trou.

6. Châssis (1) selon l'une quelconque des revendications précédentes, **caractérisé en ce que** le châssis (1) comprend des éléments de raccordement devant être reliés à des supports présents dans le siège de véhicule (24).

7. Châssis (1) selon l'une quelconque des revendications précédentes, **caractérisé en ce que** le châssis (1) comprend des éléments de guidage de ceinture de sécurité, avec un mouvement du support de serrage (4) depuis la première position jusqu'à la deuxième position qui amène une ceinture de sécurité qui est passée à travers lesdits éléments de guidage de ceinture de sécurité et qui est reliée au siège de véhicule (24) à être tendue.

8. Châssis (1) selon la revendication 7, **caractérisé en ce que** la ceinture de sécurité peut être tendue au moyen d'un support (7) qui est mobile par rapport au cadre (2), avec le support (7) qui est mobile entre deux éléments de guidage de ceinture de sécurité disposés de chaque côté du cadre (2).
